# EUROPEAN PATENT SPECIFICATION

(11) **EP 1 501 374 B1**
(45) Date of publication and mention of the grant of the patent: **03.12.2008**
(21) Application number: 03747190.1
(22) Date of filing: 21.04.2003
(51) Int. Cl.: A23L 1/212

(54) **TOMATO PRODUCT AND METHOD FOR OBTAINING SAME**
TOMATENPRODUKT UND VERFAHREN ZU SEINER GEWINNUNG
PRODUIT A BASE DE TOMATE ET PROCEDE DE PRODUCTION ASSOCIE

(30) Priority: 23.04.2002 IL 14929802
(43) Date of publication of application: 02.02.2005
(73) Proprietor: Lycored Natural Products Industries Ltd, 84102 Beer-Sheva (IL)
(72) Inventor: ZELKHA, Morris, 84965 Omer (IL); ALBERT, Zvi, 27093 Kiryat Bialik (IL)
(74) Representative: Modiano, Micaela Nadia
(86) International application number: PCT/IL2003/000325
(87) International publication number: WO 2003/090554

(56) References cited:
- WO-A-95/16363
- WO-A-03/024243
- US-A- 4 670 281
- US-A- 5 837 311
- TRIFIRO A ET AL: "Temperature effects on rheological parameters of vegetable food fluids in relation to their pulp contents." INDUSTRIA CONSERVE, vol. 69, no. 2, 1994, pages 139-147, XP0008021475 ITALY
- TANGLERTPAIBUL T ET AL: "FLOW PROPERTIES OF TOMATO CONCENTRATES: EFFECT OF SERUM VISCOSITY AND PULP CONTENT" JOURNAL OF FOOD SCIENCE, vol. 52, no. 2, 1 March 1987 (1987-03-01), pages 318-321, XP002043494 ITALY ISSN: 0022-1147
- FLÜSSIGES OBST, vol. 43, no. 9, 1976, pages 334-344,

## Description

### Field of the Invention

The present invention relates to the field of tomato products. Particularly, to a novel tomato product and a method for obtaining it.

### Background of the Invention

The most common and basic industrial products made of tomatoes are tomato concentrates which contain at least 24% soluble solids. This family of products has a standard of identity set by the United States Department of Agriculture (USDA) and can be described as: the products which are obtained by extracting liquid from tomatoes, free from seeds and skin and removing part of the water by evaporation up to a defined range of concentration. The concentration is expressed in units of "Brix" or "total soluble-solids", both represent the percentage of soluble solids in the liquid phase, or more accurately defined as the measure of the total soluble solids, expressed as if they were sucrose, measured by means of a refractometer.

The total soluble solids (TSS) of a fresh tomato is about 5° Brix. Most of the industrial tomato concentrates are in the range of 28°-32° Brix and they are classified as tomato paste. It is ,therefore, understood that to obtain for example, one measure of 30 Brix paste, requires 6 measures of fresh tomatoes.

Tanglertpaibul and Rao (J. Food Science, (1987) 52 (2), 318-321) described the effect of soluble solids in serum and that of insoluble solids (pulp) on apparent viscosities of tomato concentrates. In this study, by varying the pulp content between +30% and -30% of the normal amount of pulp and the serum concentration from 5,6 to 20° Brix, the relative role of soluble and insoluble solids on rheological properties of tomato concentrates was established.

The basic process to produce tomato paste is as follows: Fresh tomatoes are washed, sorted to remove unsuitable fruit, crushed and heated to 65°-95° C, then the crushed tomatoes are strained to remove seeds and skins to obtain the liquid. The liquid is concentrated by removing water usually in a thermal evaporator which cooks the liquid under vacuum, thus creating boiling at reduced temperature. The vapors generated are removed by condensation until the desired Brix is reached. The average conditions of the concentration process are temperature of 70° C and residence time of 2-3 hours (Moresi, M. and Liveroti, C.; "Economic study of tomato production", J. Fd Technol., (1982) 17, 177-192). The evaporation process under heat causes the paste to differ from the fresh raw material in the following manner, as described by Buttery et al, J Agri. Food Chem., (1990) 38, 336-340; Barreiro et al, J Food Engineering, (1997) 33, 359-371 and in the *White Book on the Antioxidants in Tomatoes and Tomato Products and Their Health Benefits:*
a) Most of the aroma and flavor constituents are stripped in the process.
b) The color of the paste is degraded due to partial oxidation of the lycopene, as well as browning due to excessive heating.
c) The taste of the paste has some cooked off-flavor.
d) Nutritional elements such as lycopene and vitamins such as vitamin-C, and thiamine are partially destroyed by oxidation which is accelerated under heat.

Starting from tomatoes containing about 70-100 ppm lycopene and 5° Brix, the tomato concentrate obtained having 30° Brix will normally contain 350 - 400 ppm, which is equivalent to about 63%-83% lycopene recovery.

WO 03024243 describes a tomato processing method and system for producing tomato paste and other food products affected by viscosity. Tomatoes processed therein are subjected to enzymatic treatment followed by thermal treatment of the tomato in an evaporator or in a drying mechanism, which is used to concentrate a cake instead of an evaporator thus removing a substantial amount of water and increasing the Brix value to a concenration of about 22 to 75° Brix. The serum portion is concentrated by removing a portion of water using an evaporator such as a thin film or juice evaporator. The serum and cake portions are recombined to produce a tomato paste. However, said processes of enzymatic and following thermal treatment may result in degradation of the tomato cake components.

Sulc (Flüssiges Obst, (1976), 43 (9), 334-344) describes the modified serurh method for producing tomato concentrate, which also involves enzymatic treatment of tomato juice to make it less viscic and as a result to improve separation of serum and pulp in the decanter. According to Sulc, the obtained serum is concentrated and recombined with pulp to obtain the tomato concentrate product. In order to reduce viscosity before pumping the pulp, Sulc suggested adding tomato juice to tomato pulp after decantation in a ratio 1:1, otherwise it would be impossible to pump the pulp.

Tomato paste has many uses in numerous products and dishes. Its function as a food ingredient can be summarized as:
a) Contributing the tomato taste and flavor.
b) Giving the red color to the product or dish.
c) Contributing to the texture of the product.

Therefore, the main quality parameters under which tomato paste is tested are: color, viscosity, flavor and lycopene content, in addition to other parameters such as Brix and pH.

In view of the aforementioned there is a long felt need for a tomato product which provides the functions of tomato paste without the aforementioned shortcomings of tomato paste.

It is therefore a purpose of the present invention to provide a tomato product with improved properties over tomato paste, particularly with respect to flavor, lycopene content and color.

It is further a purpose of the present invention to provide a process for the preparation of a tomato product with improved properties.

Other objects of the invention will become apparent as the description proceeds.

### Summary of the Invention

The present invention provides a tomato product with Brix of 4° to 6°, preferably about 5°; lycopene content of 300 to 1500 ppm, and viscosity of 3 to 14 cm according to the Bostwick analysis method.

Further provided by the present invention is a method for obtaining the tomato product of the present invention, comprising of controlling the ratio between tomato pulp and a liquid fraction of the tomato, wherein said liquid fraction is tomato juice and the ratio between the tomato pulp and liquid fraction is in the range of 1:1,5 to 1:3.

Further provided by the present invention is the use of the claimed tomato product as a flavoring and texturing agent, and as a source of lycopene wherein said product is of reduced caloric value.

### Detailed Description of a Preferred Embodiment of the Invention

The following description is illustrative of embodiments of the invention. The following description is not to be construed as limiting, it being understood that the skilled person may carry out many obvious variations to the invention.

Throughout the description, percentage of components and ratios are by weight. Furthermore the terms "tomato paste" and "tomato concentrate" are synonymous.

The present invention provides a novel approach to the concentration of tomato products. The invention concentrates the functional elements of the tomato in a non-thermal process, by separation of said elements, while traditionally tomato concentrates are prepared by water removal. Said novel approach demonstrates a method according to which the correlation between viscosity and Brix of a tomato product is not constantly proportional. For purposes of the present invention, the viscosity of the tomato product has been determined relatively to other tomato concentrates or pastes by a modified Bostwick analysis method as described in the Examples. Throughout the description and claims Bostwick method means the modified Bostwick method described herein.

According to the present invention there is provided a tomato product with Brix similar to the Brix of a raw tomato; lycopene content in the range of 600% to 1200% of that of a raw tomato, and viscosity of 3 to 14 cm according to the Bostwick analysis method. Hence, the raw tomato employed for the purpose of obtaining the tomato product of the present invention is material in determining the Brix and lycopene content of the tomato product. Accordingly, the properties of the tomato product may also be controlled by the variety of tomato employed for obtaining the tomato product.

According to the present invention the tomato product has the following properties:
1) Brix of 4° to 6°.
2) Lycopene content of 300 to 1500 ppm.
3) Viscosity of 3 to 14 cm according to the Bostwick analysis method.

Tomato paste is used in food stuff mainly to provide one or more of the following functions: to add color, taste and texture; to control viscosity; and as a source of lycopene. The present tomato product provides all of the aforementioned functions, and for several of said functions has been found to be superior to tomato paste.

As a color and source of lycopene, the tomato product of the present invention provides a more intense red color than tomato paste and higher lycopene levels. Furthermore, the methods for preparing tomato paste include heat treatment at temperatures which may cause degradation of the lycopene, hence, adversely effecting the red color and lycopene content of the paste. The present tomato product is not subjected to such treatment.

As a texturizing and viscosity-controlling agent the present tomato product is as effective as tomato paste. Said properties of the tomato product can easily be controlled by adjusting the ratio between the pulp and the liquid fraction.

The present tomato product is not subjected to conditions which may damage the natural tomato flavor, e.g. prolonged exposure to heat. Hence, in terms of taste, the tomato product provides a flavor closer to the flavor of a fresh tomato than the flavor provided by tomato paste.

Thus, it is clearly evident that the present tomato product can be used as a substitute for tomato paste and even provide superior performance in comparison to tomato paste in terms of color, taste and lycopene content. An important feature of the present invention is found in the fact that the soluble solids content of the tomato product is only about 15% to 20% of the soluble solids content of tomato paste. Said soluble solids provide a substantial part of the caloric value of tomato concentrates, thus the present tomato product has a substantially reduced caloric value in comparison with tomato paste.

According to a further embodiment of the present method the tomato product is prepared by combining tomato pulp with tomato juice wherein the weight ratio pulp:juice is between 1:1,5 to 1:3. The desired properties of the tomato product may be controlled by said ratio, e.g. higher viscosity would require less juice. Tomato juice may be obtained according to methods well known in the art. The pulp may be obtained according to the process described in U.S. patent No. 5,837,311. Pulp is obtained from straining the tomato through a strainer with holes ranging in the size of 1.5-1.6 mm.

According to a preferred embodiment of the present invention the pulp and juice are combined at a pulp to juice ratio of 1:1,5 to 1:2, preferably 1:1.5.

According to yet a further embodiment of the present method, the tomato product claimed herein may be obtained by removal of serum from the tomato such that the desired weight ratio between the tomato pulp and serum is achieved. Said ratio being in the range of 1:1 to 1:3. The method may be carried out under modified conditions of certain stages of the process described in U.S. patent No. 5,837,311. Accordingly, controlling the conditions of the separation between the pulp and the serum, for example by decantation, enables the skilled artisan to obtain the tomato product. The amount of serum separated from the pulp controls the properties of the tomato product obtained therefrom. According to the present embodiment, the tomato product is obtained in the pulp fraction of the separation process.

In yet a specific embodiment of the present invention, the tomato product is obtained in a form wherein the pulp is a crude pulp. Crude pulp is obtained wherein the tomatoes have been strained through a strainer with holes in the range of 4-8 mm. The crude pulp may contain seeds and some of the tomato skin. A tomato product containing crude pulp is particularly useful in preparing tomato sauce for pizza and the like.

An additional advantage of the present process is derived from the low energy requirements. To produce one metric ton of 30° Brix tomato paste in the, classical thermal evaporation system requires about 4.2 × 10⁶ kJ (1,000,000 kcal) While to produce one metric ton of the tomato product requires only 2.7 × 10⁵ kJ 65,000 kcal. Since a predominant part of the commercial evaporation systems in the tomato paste industry employ steam as a heat source, approximately 136kg (300 lbs.) of heavy oil are burnt in the steam boiler for each metric ton of tomato paste, compared to 9kg (20 lbs.) only for producing one metric ton of the tomato product. This significantly lowers process costs and has an important environmental impact by significantly reducing environmentally damaging emissions.

### Examples

### Example 1: Preparation of the Tomato Product

Raw fresh tomatoes are washed, sorted, crushed and strained to remove seeds and skins, and are then transferred to a feed tank. The strained crushed tomatoes are heated to a temperature in a range of 65 to 95°C for a very short time, about 1 to 6 minutes, and then centrifuged to separate into two streams: a clear or semi clear serum and pulp. The serum is composed primarily of acids, sugars, amino acids, minerals and some of the flavor constituents dissolved in water. The pulp contains insoluble tomato solids, lycopene, tocopherols and other tomato phytonutrients, as well as small amounts of serum. The ratio of the separation process is :6-7 % pulp and 93-94 % Serum. The serum part is a by-product and has several uses as a food ingredient and as a source of tomato soluble solids in foods and beverages. The pulp and tomato juice are blended and mixed in ratios of 1:1 to 1:3. The ratio controls the viscosity of the product and the composition of some of the tomato components.

### Example 2: Preparation of the Tomato Product

Raw fresh tomatoes are washed, sorted, crushed and strained to remove seeds and skins, and are then transferred to a feed tank. The strained crushed tomatoes are heated to a temperature in a range of 65 to 95°C for a very short time, about 1 to 6 minutes, and then centrifuged under controlled conditions to separate into two streams: a clear or semi clear serum and pulp. Centrifugation is continued until the desired consistancy is obtained. The properties of the tomato product are controlled by the ration between the serum and pulp.

### Example 3: Determining viscosity of the tomato product

The viscosity of the tomato product of the present invention is determined according to a procedure which is a modified form of the Bostwick method. The principle of the Bostwick method is based on the measurement of the distance a standard sample of product is travels along a inclined surface in 30 seconds.

### Apparatus - Bostwick consistometer;

The apparatus comprises of a stainless steel slide with balancing legs, approximately 24 cm long. The sample is put in front of the slide in a 100 gr. capacity cell equipped with a spring gate. The slide has a ruler imprinted on it with measures in centimeters.

### Sample:

The paste is diluted with water down to 12.5° Brix, maintained at a temperature of 24°C and a portion of 100 gr is put in the instrument's cell. In order to measure the relative viscosity of the tomato product, it cannot be diluted to 12.5° Brix since the Brix of the tomato product is only 4 to 6. Thus, the tomato product is diluted with water in identical proportions to the dilution of the paste and maintained at the same temperature.

### Measurement:

A stop watch is started and the gate is opened. After 30 seconds the distance which the sample has run on the slide is taken and this is the viscosity value of the sample expressed in centimeters.

Generally, very viscous tomato paste has a Bostwick value of 4 to 5 cm; paste of medium viscosity has a Bostwick value of 5-7 cm; and low viscosity paste would have values of 8 cm and above.

When measuring viscosity of a 30° Brix paste, the dilution ratio with water to prepare the sample is 1:2.4 (from 30° Brix to 12.5° Brix). Therefore, it is suggested, that in order to compare the viscosity of the tomato product with the viscosity of standard tomato paste, the tomato product should be diluted with water by the same ratio and then measured in the Bostwick instrument under the same conditions.

Viscosity measurements of the tomato product:

| Ratio Pulp: Juice | Viscosity |
|---|---|
| 1:1 | 4 - 5 |
| 1:1.25 | 5-6 |
| 1:1.5 | 6-7 |
| 1:2 | 8-10 |

While embodiments of the invention have been described by way of illustration, it will be apparent that the invention may be carried out with many modifications, variations and adaptations, without departing from the scope of the claims.

## Claims

1. A tomato product with Brix value between 4° and 6°; lycopene content between 300 to 1500 ppm and viscosity of 3 to 14 cm according to the Bostwick analysis method.

2. A tomato product according to claim 1 wherein the Brix is 5°, lycopene content is 350 to 800 ppm, and viscosity is 4 to 10 cm.

3. A tomato product according to claim 1 wherein said product is a combination of tomato serum and tomato pulp.

4. A tomato product according to claim 1 wherein the said product is a combination of tomato pulp and tomato juice.

5. A tomato product according to claims 3 and 4 wherein the pulp is crude pulp.

6. A method for obtaining the tomato product of claim 1, comprising of controlling the weight ratio between tomato pulp and a liquid fraction of the tomato, wherein said liquid fraction is tomato juice and the ratio between the tomato pulp and liquid fraction is in the range of 1:1,5 to 1:3.

7. A method for obtaining the tomato product of claim 1 comprising of;
a) washing and sorting fresh tomatoes,
b) crushing and straining the tomatoes to remove seeds and skins,
c) separating the serum from the strained tomatoes until the weight ratio between the pulp and serum is in the range 1:1 to 1:3.

8. A method according to claim 7 wherein the separating of the serum from the strained tomatoes is by centrifugation or decantation

9. Use of the tomato product of claim 1 as a flavoring agent.

10. Use of the tomato product of claim 1 as a texturing agent.

11. Use of the tomato product of claim 1 as a source of lycopene.

12. Use according to any one of claims 9 to 11 wherein said product is of reduced caloric value.

## Patentansprüche

1. Ein Tomatenprodukt mit einem Brix-Wert zwischen 4° und 6°; einem Lycopingehalt zwischen 300 bis 1500 ppm und einer Viskosität von 3 bis 14 cm nach dem Bostwick-Analyseverfahren.

2. Ein Tomatenprodukt gemäß Anspruch 1, worin der Brix-Wert 5° beträgt, der Lycopingehalt 350 bis 800 ppm beträgt und die Viskosität 4 bis 10 cm beträgt.

3. Ein Tomatenprodukt gemäß Anspruch 1, wobei das Produkt eine Kombination aus Tomatenserum und Tomatenfruchtfleisch ist.

4. Ein Tomatenprodukt gemäß Anspruch 1, wobei das Produkt eine Kombination aus Tomatenfruchtfleisch und Tomatensaft ist.

5. Ein Tomatenprodukt gemäß den Ansprüchen 3 und 4, wobei das Fruchtfleisch rohes Fruchtfleisch ist.

6. Ein Verfahren zur Gewinnung des Tomatenprodukts gemäß Anspruch 1, das die Kontrolle des Gewichtsverhältnisses zwischen Tomatenfruchtfleisch und einer flüssigen Fraktion der Tomate umfasst, wobei die flüssige Fraktion Tomatensaft ist und das Verhältnis zwischen dem Tomatenfruchtfleisch und der flüssigen Fraktion im Bereich von 1:1,5 bis 1:3 liegt.

7. Ein Verfahren zur Gewinnung des Tomatenprodukts gemäß Anspruch 1, das Folgendes umfasst:
a) Waschen und Sortieren frischer Tomaten,
b) Zerkleinern und Sieben der Tomaten, um Samen und Häute zu entfernen,
c) Abtrennen des Serums von den gesiebten Tomaten, bis das Gewichtsverhältnis zwischen dem Fruchtfleisch und dem Serum im Bereich 1:1 bis 1:3 liegt.

8. Ein Verfahren gemäß Anspruch 7, wobei die Abtrennung des Serums von den gesiebten Tomaten durch Zentrifugieren oder Dekantieren stattfindet.

9. Verwendung des Tomatenprodukts gemäß Anspruch 1 als Geschmacksstoff.

10. Verwendung des Tomatenprodukts gemäß Anspruch 1 als Texturierstoff.

11. Verwendung des Tomatenprodukts gemäß Anspruch 1 als Quelle für Lycopin.

12. Verwendung gemäß einem beliebigen der Ansprüche 9 bis 11, wobei das Produkt einen reduzierten Kalorienwert hat.

## Revendications

1. Produit à base de tomate présentant une valeur Brix entre 4° et 6° ; une teneur en lycopène entre 300 et 1500 ppm, et une viscosité de 3 à 14 cm, selon le procédé d'analyse de Bostwick.

2. Produit à base de tomate selon la revendication 1, dans lequel la valeur Brix est de 5°, la teneur en licopène est de 350 à 800 ppm et la viscosité est de 4 à 10 cm.

3. Produit à base de tomate selon la revendication 1, dans lequel ledit produit est une combinaison de sérum de tomate et de pulpe de tomate.

4. Produit à base de tomate selon la revendication 1, dans lequel ledit produit est une combinaison de pulpe de tomate et de jus de tomate.

5. Produit à base de tomate selon les revendications 3 et 4, dans lequel la pulpe est de la pulpe brute.

6. Procédé d'obtention du produit à base de tomate selon la revendication 1, comprenant le contrôle du rapport en poids entre la pulpe de tomate et une fraction liquide de tomate, ladite fraction étant du jus de tomate et le rapport entre la pulpe de tomate et la fraction liquide est de l'ordre de 1:1,5 à 1:3.

7. Procédé d'obtention du produit à base de tomate selon la revendication 1, comprenant :
a) le lavage et le triage de tomates fraîches,
b) le broyage et le filtrage des tomates pour éliminer les graines et les peaux,
c) la séparation du sérum des tomates filtrées jusqu'à ce que le rapport en poids entre la pulpe et le sérum soit de l'ordre de 1:1 à 1:3.

8. Procédé selon la revendication 7, dans lequel la séparation du sérum des tomates filtrées s'effectue par centrifugation ou décantation.

9. Utilisation du produit à base de tomate selon la revendication 1 comme agent aromatisant.

10. Utilisation du produit à base de tomate selon la revendication 1, comma agent texturant.

11. Utilisation du produit à base de tomate selon la revendication 1 comme source de lycopène.

12. Utilisation selon l'une quelconque des revendications 9 à 11, ledit produit présentant une valeur calorique réduite.
